(19) Europäisches Patentamt / European Patent Office / Office européen des brevets

(11) **EP 2 671 002 B1**

(12) **FASCICULE DE BREVET EUROPEEN**

(45) Date de publication et mention
de la délivrance du brevet:
**29.07.2015 Bulletin 2015/31**

(21) Numéro de dépôt: **12707846.7**

(22) Date de dépôt: **01.02.2012**

(51) Int Cl.:
*F16H 48/22* *(2006.01)*     *F16H 48/08* *(2006.01)*

(86) Numéro de dépôt international:
**PCT/FR2012/050225**

(87) Numéro de publication internationale:
**WO 2012/104557 (09.08.2012 Gazette 2012/32)**

(54) **DIFFÉRENTIEL AUTOBLOQUANT PERFECTIONNÉ**

VERBESSERTES SELBSTVERRIEGELNDES DIFFERENTIAL

IMPROVED SELF-LOCKING DIFFERENTIAL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **04.02.2011 FR 1150905**

(43) Date de publication de la demande:
**11.12.2013 Bulletin 2013/50**

(73) Titulaire: **Renault S.A.S.
92100 Boulogne-Billancourt (FR)**

(72) Inventeurs:
• **RAOUL, Michel**
  **F-78990 Elancourt (FR)**
• **PION, Emmanuel**
  **F-75011 Paris (FR)**

(56) Documents cités:
**DE-B- 1 169 311     FR-A- 1 596 579
FR-A1- 2 547 883     JP-A- 3 223 550**

**Description**

La présente invention concerne un différentiel autobloquant, notamment pour véhicule automobile.

Plus précisément, elle a pour objet un différentiel autobloquant de véhicule routier composé d'un boîtier renfermant au moins un axe porte-satellites, deux planétaires reliés à l'axe porte-satellites par un ensemble de satellites, un élément central de retenue des planétaires contre celui-ci, et au moins une série de disques de frottement, destinés à transférer un couple de frottement à l'une des roues associées, en réponse à une poussée axiale du planétaire opposé à celle-ci.

Le différentiel d'une boîte de vitesses automobile a pour fonction d'entraîner les deux arbres de sortie à partir d'un seul arbre d'entrée. Il permet d'entraîner ces deux arbres de sortie à des vitesses de rotation différentes, mais selon deux couples égaux, soit la moitié du couple de l'arbre d'entrée.

L'inconvénient des différentiels traditionnels réside dans le fait que le couple de sortie sur les deux arbres est limité au plus faible des couples résistants des roues. Autrement dit, si une des roues est en forte perte d'adhérence, le couple accepté par cette dernière devient faible. Elle aura tendance à s'emballer. L'autre roue a conservé son adhérence. Le couple adressé à celle-ci ne peut être supérieur à celui accepté par la roue en perte d'adhérence. Si ce couple est très faible, la roue adhérente ne tourne pas, et le véhicule reste immobile.

Par la publication FR 2 547 883, on connaît un différentiel autobloquant comprenant un organe d'entrée, deux organes de sortie, puis deux arbres de sortie associés chacun à l'un des organes de sortie, et des moyens de solidarisation mobiles axialement pour solidariser, par leur déplacement axial, l'organe d'entrée avec l'un des organes de sortie. Les moyens de solidarisation sont deux dispositifs de couplage indépendants, de type multidisque, susceptibles de lier le boîtier d'entrée et l'un ou l'autre des planétaires de sortie. Les moyens de couplage sont « pré chargés » à l'aide de ressorts. L'effort de serrage de l'un ou l'autre des multidisques est une poussée axiale provenant du planétaire opposé et transmise par un manchon de réaction intercalé entre les deux planétaires. Cet effort de serrage est la différence des poussées axiales et opposées des deux planétaires apparues dans des liaisons à rampes obliques entre ces derniers et les arbres de sortie. Ces rampes mesurent la réaction de chaque roue, autrement dit son adhérence par rapport au sol.

Lorsque les deux réactions axiales sont égales, les deux multidisques restent ouverts. Aucun effort de serrage n'apparaît. Le différentiel se comporte de manière classique, dite libre. Cet état suppose une bonne adhérence pour chaque roue, ou des adhérences de même niveau. Il est aussi nécessaire que les roues tournent à la même vitesse, autrement dit que la voiture évolue en ligne droite.

Mais, lorsque la voiture évolue en virage, en situation de bonne adhérence, les roues parcourent des trajectoires différentes. La roue à l'intérieur du virage parcourt moins de distance que la roue extérieure. La roue intérieure devient plus lente que le boîtier de différentiel. La roue extérieure devient plus rapide. Les frottements internes, des satellites sur leurs axes et sur leurs appuis, des planétaires sur leurs appuis, des arbres de sortie sur leurs appuis, etc., modifient alors la valeur de couple adressée à chaque roue. Il se produit alors un transfert de couple de la roue rapide vers la roue lente. La roue la plus lente peut ainsi recevoir la moitié du couple moteur augmentée de la moitié du couple de frottement interne, alors que la roue rapide reçoit la moitié du couple moteur diminuée de la moitié du couple de frottement. Cet écart de couple sur les planétaires et dans les rampes obliques, qui peut atteindre, dans ce type de différentiel jusque 20% du couple d'entrée, initie le serrage du groupe de disques placé du coté de la roue rapide qui développe moins de poussée axiale. Le serrage initialisé de l'un des groupes de disques, déséquilibre encore davantage les efforts axiaux dans les rampes. Par un effet d'auto amplification, on peut aller jusqu'au transfert total de couple de la roue rapide vers la roue lente. Dans cette situation, le différentiel n'a pas la liberté de fonctionnement requise pour assurer au véhicule une bonne maitrise de la trajectoire du véhicule en virage. Le transfert de couple sur la roue intérieure du virage donne au véhicule une forte tendance au sous virage.

Par ailleurs, lorsqu'une roue est en perte d'adhérence, la réaction axiale dans la liaison à rampes obliques entre le planétaire et l'arbre de sortie correspondant, chute fortement. Une différence apparaît entre les poussées axiales des deux planétaires. Elle provoque le serrage du groupe de disques du même coté que la roue en perte d'adhérence. Le couple de friction dans le groupe de disques se substitue au couple non accepté par la roue et permet de transmettre, à la roue opposée et adhérente, un couple de même valeur, suffisant pour assurer le déplacement du véhicule. Pour adresser la totalité du couple moteur à la roue adhérente, il faut alors que le couple de friction dans le groupe de disques soit de cette valeur. Dans ce cas, le couple de frottement du groupe des disques est transféré par l'intermédiaire du mécanisme central (planétaires et satellites) qui en définitive voit sa sollicitation être le double du couple moteur.

Le différentiel décrit dans le document FR 2 547 883, a son axe de satellites et ses satellites fixes par rapport au boîtier. Or, le transfert des poussées axiales d'un planétaire à l'autre via le manchon de réaction central et le serrage des disques, nécessitent le déplacement axial des planétaires. Dans ce différentiel, la capacité de déplacement dépend du jeu d'engrènement des dentures planétaire/satellites. Mais un jeu trop important est préjudiciable à la tenue de cette denture, tandis qu'un jeu trop étroit limite le jeu de libération des disques et là réserve d'usure des disques, avec en plus, un risque de bruyance des dentures. Ces contraintes limitent donc le bon fonctionnement du mécanisme.

En résumé ce différentiel présente trois inconvénients majeurs :

- un phénomène de transfert de couple initialisé par les frottements internes,

- une sollicitation maximale possible des satellites et des planétaires deux fois plus élevée que dans un différentiel classique, et

- le déplacement axial et relatif des planétaires par rapport aux satellites.

Pour palier ces inconvénients, l'invention propose un différentiel autobloquant, qui prend en compte et neutralise l'effet d'auto-fermeture initialisé par les frottements internes.

Ce différentiel comporte une couronne porte-disques intégrant un dispositif de compensation d'efforts capable de maintenir ouvertes les séries de disques tant que l'écart des couples aux sorties du différentiel n'excède pas le couple crée par les frottements internes du mécanisme.

Il possède de préférence deux séries de disques fermés simultanément, ce qui limite la sollicitation des satellites et des planétaires à une fois le couple moteur.

Grâce à ces mesures, les planétaires et les satellites se déplacent en bloc, donc à jeux de dentures constants.

La présente invention sera mieux comprise à la lecture de la description suivante d'un mode de réalisation non limitatif de celle-ci, en se reportant aux dessins annexés, sur lesquels :

- la figure 1 est une représentation d'ensemble du différentiel proposé en position de repos (roulage rectiligne),
- la figure 2 montre les rampes d'entraînement des galets par la couronne porte- satellites,
- la figure 3 montre les rampes d'un arbre de sortie par un planétaire,
- la figure 4 est une coupe longitudinale du pack central pré-assemblé,
- la figure 5 est une coupe transversale au niveau des axes de satellites.
- la figure 6 et une coupe du différentiel en fonctionnement ouvert (bonne adhérence à droite et à gauche avec virage à gauche),
- la figure 6A montre le dispositif de compensation dans cette situation
- la figure 7 est une coupe du différentiel en fonctionnement (forte perte d'adhérence à droite), et
- la figure 7A montre le dispositif de compensation dans cette situation).

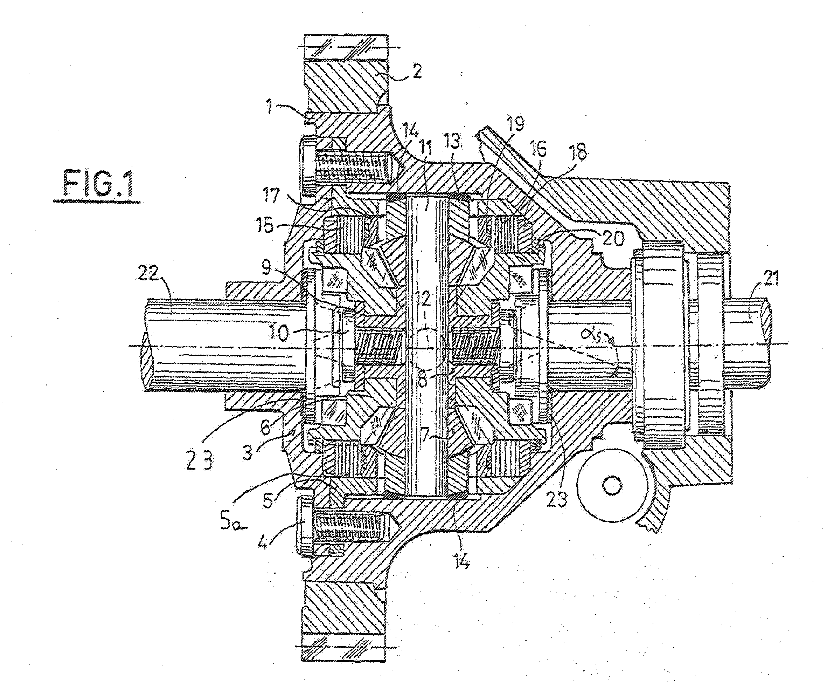

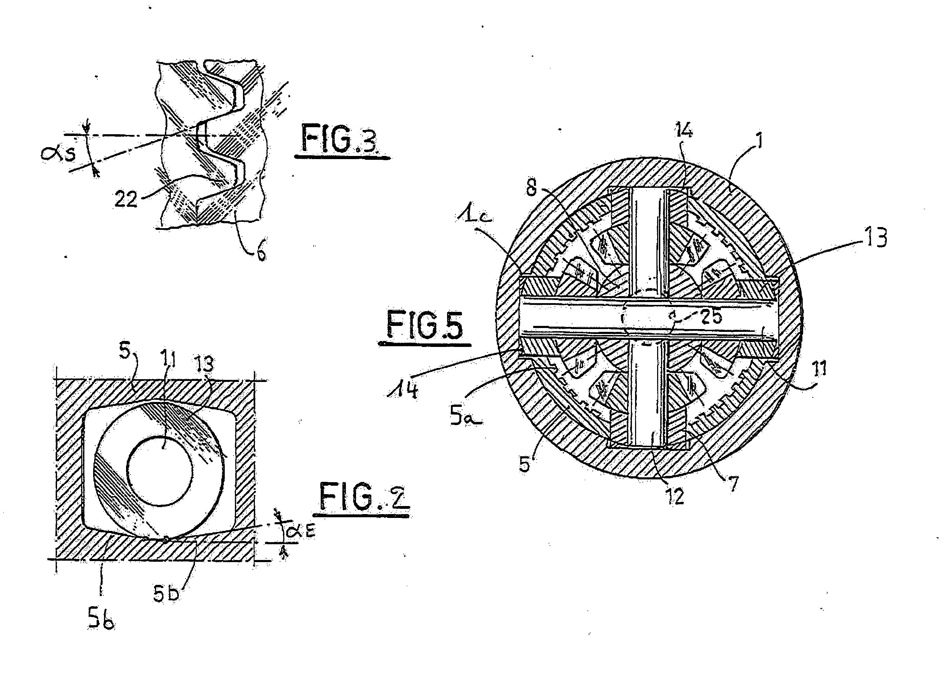

Le différentiel illustré par la figure 1 comprend un boîtier 1 sur lequel est fixée une couronne de pont 2. Il est fermé par un couvercle 3, à l'aide de vis de maintien 4. Le boîtier 1 retient une cage, ou couronne porte-disques 5. La couronne porte-disques 5 est vissée sur le boîtier 1 et porte des galets d'entraînement 13 d'axes de satellites 11, 12. Elle présente des rampes inclinées d'entraînement de ces derniers visibles sur la figure 2.

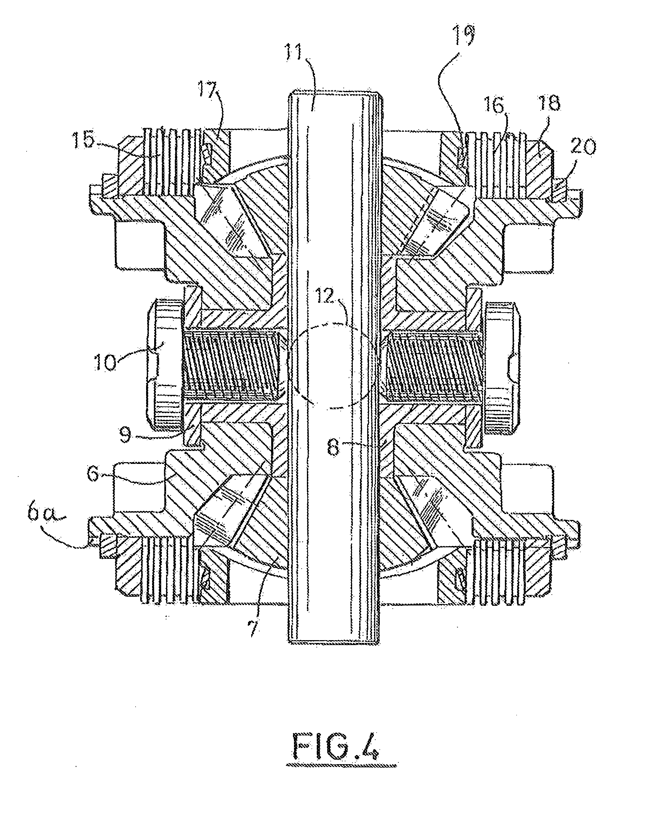

Le boîtier 1 renferme un bloc central agrandi sur la figure 4. Ce bloc est constitué d'un croisillon central 8 et de deux planétaires 6 centrés sur celui-ci. Chaque planétaire 6 présente une cannelure extérieure 6a d'entraînement de disques. Il est retenu axialement sur le croisillon par une rondelle 9 sur laquelle prend appui une vis de retenue 10. Les satellites 7, au nombre de deux ou de quatre, sont portés par un axe de satellites 11 et deux demi axes de satellites 12, guidés par le croisillon 8. Les axes de satellites sont entraînés par la couronne porte-disques 5 par l'intermédiaire de galets d'entraînement 13, retenus dans le boîtier 1 celle-ci par autant de coupelles sphériques d'appui 14 visibles sur les figures 1 et 5. La couronne porte-disques 5 est liée au boîtier 1 par une série de disques 4. Deux séries de disques identiques 15, 16, sont agencés entre les planétaires 6 et la couronne porte-disques 5. La couronne 5 présente des cannelures intérieures 5a d'entraînement des disques visibles sur la figure 5. Les séries de disques 15, 16 sont disposés sur la couronne 5 entre une entretoise de pression 17 centrale et deux plateaux presseurs extérieurs 18. Des ressorts de pré charge 19, placés sur l'entretoise 17, prennent appui sur les disques. Les plateaux presseurs 18 sont entraînés en rotation et axialement par les planétaires 6. Ils sont retenus sur les planétaires par un anneau d'arrêt 20.

Les manchons ou arbres de sortie 21, 22 du différentiel sont en appui contre le boîtier 1 par l'intermédiaire de rondelles d'appui 23. Les planétaires 6 entraînent les arbres, ou manchons de sortie, 21, 22 du différentiel par l'intermédiaire de rampes obliques. Cette disposition est mise en évidence sur la figure 3, qui illustre l'entraînement de l'arbre de sortie gauche 22 par le planétaire gauche 6.

En résumé, le différentiel proposé est composé d'un boîtier 1 renfermant au moins un axe porte-satellites 11, deux planétaires 6 reliés à l'axe porte-satellites 11 par un ensemble de satellites 7, un croisillon 8, formant élément central de retenue des planétaires contre celui-ci, et au moins une série de disques de frottement, destinés à transférer un couple de frottement à l'une des roues associées au différentiel en réponse à une poussée axiale du planétaire opposé à celle-ci.

Sur la figure 2, on retrouve les galets d'entraînement 13 des axes de satellites. Le dispositif de compensation proposé comprend des rampes, ou contre-rampes de compensation obliques 5b, disposées en V à l'intérieur de la couronne porte-disques 5, sur lesquelles peut se déplacer chaque galet 13. Elles coopèrent avec les galets pour compenser l'écart des poussées des planétaires 6 provoqué par une différence de vitesse des roues.

La coupe de la figure 5 montre la disposition de l'axe de satellites 11 et des demi-axes de satellites 12, à l'intérieur du boîtier 1. On y voit le palier de guidage 25 de planétaire, et la couronne porte disques 5 avec ses cannelures intérieures 5a d'entraînement des disques. Apparaissent également le croisillon 8 et les satellites 7. Les galets d'entraînement 13 sont en appui sur des coupelles sphériques 14 disposées dans des renfoncements 1c du boîtier 1.

Dans le cas d'une bonne adhérence symétrique en virage, le fonctionnement du différentiel proposé est le suivant. Les planétaires entraînent les manchons de sortie par l'intermédiaire de rampes obliques uniquement. Ces rampes procurent des forces axiales opposées proportionnelles au couple accepté par chaque roue.

Mais, dès que les roues ont des vitesses différentes, par exemple dans un virage, les frottements internes du mécanisme du différentiel, qui peuvent atteindre 20% du couple à la couronne, différencient les couples aux roues :

- la roue lente absorbe la moitié du couple d'entrée augmentée de la moitié du couple de frottement interne, et
- la roue rapide absorbe la moitié du couple d'entrée diminué du la moitié du couple de frottement interne.

Si nous appelons $\lambda_0$ le frottement du mécanisme interne en proportion du couple d'entrée et *CE* le couple d'entrée, les couples de sortie sont,

pour la roue rapide : $\dfrac{1}{2} \times C_E \left(1 - \lambda_0\right)$

pour la roue lente : $\dfrac{1}{2} \times C_E \left(1 + \lambda_0\right)$

Dans un différentiel autobloquant, la différence des couples aux roues donne des efforts opposés inégaux sur les planétaires. Cette différence d'efforts est appliquée au bloc central et provoque son déplacement. En se déplaçant, il assure la fermeture des séries de disques avec une force de serrage qui dépend de la différence des forces opposées dans les rampes de sortie. Cela entraîne une augmentation de la traînée interne. Par un effet d'auto-amplification, celle-ci peut conduire à un transfert élevé voire total du couple de la roue rapide vers la roue lente. Ce phénomène, qualifié de « vidage » se produit en situation de bonne adhérence sur chaque roue.

Pour empêcher ce phénomène indésirable, le différentiel proposé possède le dispositif de compensation illustré par la figure 2, capable de maintenir centré le bloc central, donc de maintenir les séries de disques ouvertes. Ce dispositif est intégré à la couronne porte-disques 5. Il est capable de maintenir ouvertes les séries de disques, tant que l'écart des couples aux sorties du différentiel n'excède pas le couple crée par les frottements internes du mécanisme.

Grâce à cette mesure, il n'y a pas de transfert de couple d'une roue sur l'autre, tant que l'adhérence des deux roues est bonne. Autrement dit, il n'y a pas de transfert de couple, tant que l'écart des couples aux sorties n'excède pas celui provoqué par les frottements internes du mécanisme. Au-delà, l'ensemble des disques doit cependant être capable de transférer sur une seule roue l'ensemble du couple reçu, diminué des frottements internes du mécanisme, en cas d'emballement de la roue opposée.

L'effort axial au contact des galets 13 et de la cage porte-disques 5 s'oppose au déplacement du planétaire le plus fort (la roue lente). L'angle des rampes $\alpha_E$ de la figure 2 est choisi de manière à fournir une force de compensation à hauteur de l'écart des poussées des planétaires provoquées par l'écart des couples de sortie dû aux frottements internes du mécanisme. La couronne 5 présente deux paires de rampes symétriques 5b disposées en V, pour compenser l'écart des poussées en cas de ralentissement de l'une ou l'autre roue, ce qui rend le système parfaitement symétrique. Le différentiel fonctionne donc en différentiel libre tant que l'adhérence est suffisante sur chaque roue pour accepter le couple fourni par le différentiel.

L'angle des rampes 5b est déterminé de manière à fournir une force de compensation à hauteur de l'écart des poussées des planétaires 6 provoquées par l'écart des couples de sorties dû aux frottements internes du mécanisme.

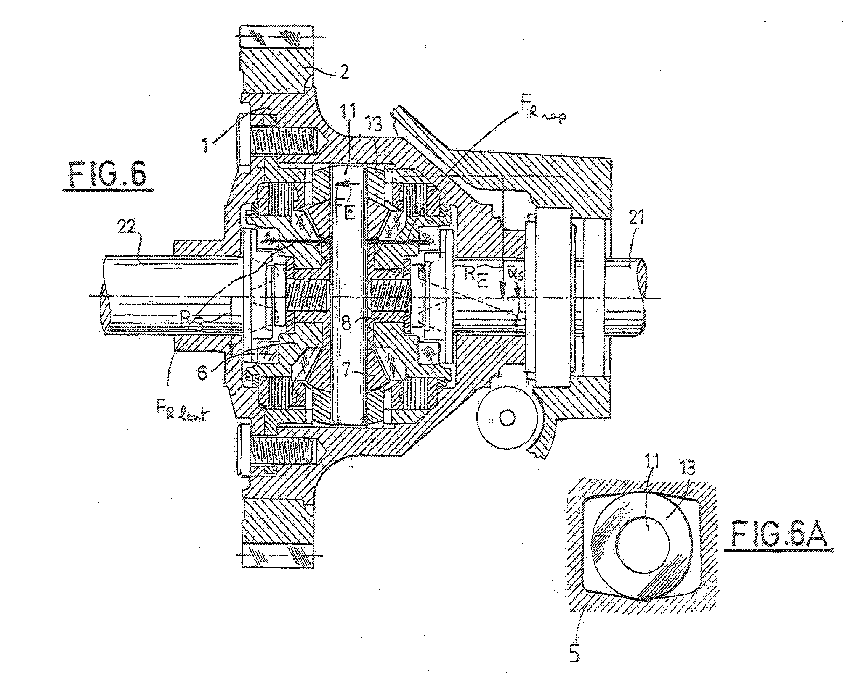

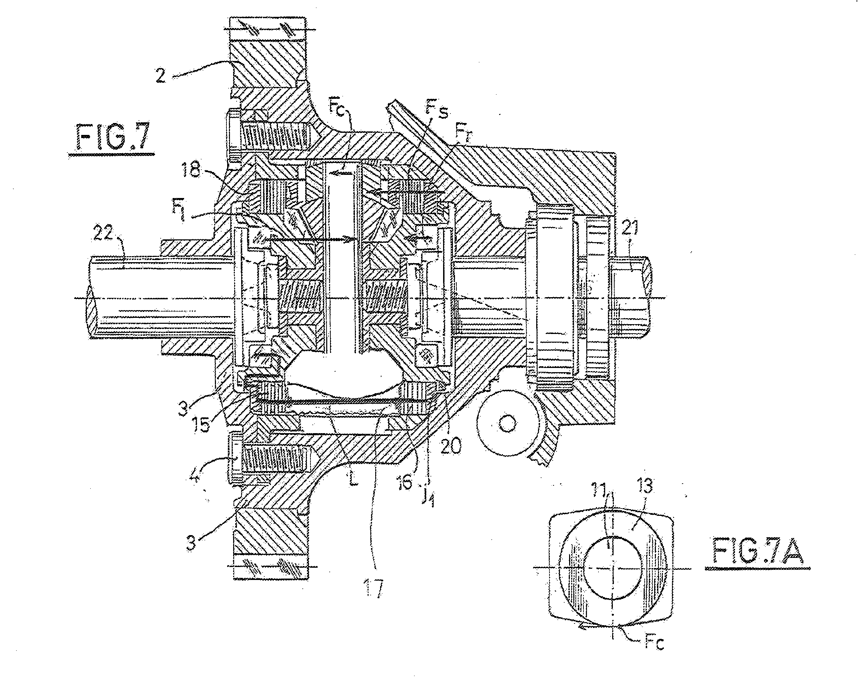

Sur les figures 6 et 7, on a représenté les efforts axiaux s'exerçant à l'intérieur du différentiel en fonctionnement, avec le cheminement des efforts axiaux :

- dans le cas d'un virage à gauche avec une bonne adhérence à droite et à gauche (figure 6)

- et dans le cas de roulage en ligne droite et de forte perte d'adhérence à droite (figure 7).

La roue lente est à gauche, et la roue rapide est à droite par rapport au schéma. Sur les figures 6 et 6A, on voit que la force axiale dans la rampe oblique (cf. figure 3) côté roue lente $F_{Rlent}$ (à gauche) est plus élevée que la force axiale dans la rampe oblique côté roue rapide $F_{Rrap}$ (à droite), et que le galet 13 s'est légèrement déplacé vers la droite, avec le point d'application de l'effort de compensation $F_E$ dans la rampe de droite.

Si on adopte les données suivantes,

- $\alpha_E$ : l'angle des rampes de compensation (voir figure 2)
- $R_E$ : le rayon moyen de contact des galets sur les rampes de compensation
- $R_S$ : le rayon moyen de rampes de sortie
- $\alpha_S$ : l'angle des rampes de sortie (voir figure 3)

dans ce cas, la force axiale dans la rampe oblique coté roue rapide est :

$$F_{Rrap} = \frac{1}{2} \times C_E \times (1 - \lambda_0) \times \frac{tg(\alpha_s)}{R_S} \, ,$$

tandis que la force axiale dans la rampe oblique coté roue lente est :

$$F_{Rlent} = \frac{1}{2} \times C_E \times (1 + \lambda_0) \times \frac{tg(\alpha_s)}{R_S}$$

L'écart des forces est

$$\Delta F_S = \frac{\lambda_0 \times C_E \times tg(\alpha_s)}{R_s}$$

La force de compensation dans la rampe d'entrée est :

$$F_E = \frac{C_E \times tg(\alpha_E)}{R_E}$$

Il faut une force de compensation égale ou de l'ordre de grandeur de l'écart des forces de sortie, soit:

$$\frac{tg(\alpha_E)}{R_E} = \frac{\lambda_0 \times tg(\alpha_s)}{R_S}$$

$$\boxed{tg(\alpha_E) = \lambda_0 \times \frac{R_E \times tg(\alpha_s)}{R_S}}$$

Cette relation montre que l'angle d'entrée est fonction linéaire de $\lambda_0$, c'est-à-dire du couple de frottement interne.

Dans le cas d'une perte d'adhérence élevée ou totale (figures 7 et 7A), le couple accepté par la roue en perte d'adhérence devient faible ou nul et la rampe de sortie correspondante n'adresse plus aucune poussée axiale. Cette roue a tendance à s'emballer, c'est la roue rapide.

Pour rétablir de la motricité il faut être capable de transmettre le couple d'entrée à la roue lente qui est supposée avoir une adhérence totale et être capable de transmettre la totalité du couple moteur.

L'ensemble mécanisme et groupes de disques doit être capable de transmettre la totalité du couple d'entrée. Les groupes de disques doivent pouvoir transférer la totalité du couple moins les frottements internes du mécanisme produits par l'ensemble des zones de glissement qui participent aussi au transfert de couple. Le différentiel doit donc être capable de transférer sur une seule roue l'ensemble du couple reçu, diminué des frottements internes du mécanisme, en cas d'emballement de la roue opposée.

Sur les figures 7 et 7A, correspondant à une perte d'adhérence quasi-totale de la roue droite, la force de serrage

$F_S$ est égale à la différence des poussées axiales exercées dans les rampes de sortie $F_L$ pour roue lente, $F_R$ pour roue rapide, à laquelle il faut retrancher la force de compensatinon $F_C$ dans le dispositif de compensation qui est actif en permanence :

$$F_S = F_L - F_R - F_C$$

Sous l'influence de ces forces, le bloc central est déplacé vers la droite. On a fait apparaître le jeu $j_1$ existant (en augmentation), entre le plateau presseur 18 et l'anneau d'arrêt 20 de droite. Enfin, on a représenté la ligne de force de serrage L des groupes de disques transitant du planétaire gauche au boîtier 1, en passant par les séries de disques 15 et 16 et l'entretoise 17.

Avec les données suivantes,

- $\mu_d$ : le coefficient de frottement dynamique apparent des disques,
- $R_d$ : le rayon moyen des disques,
- $N$ :le nombre de faces de friction,

la résultante des forces de sortie quand il y transfert de couple total à la roue lente (pas de couple à la roue rapide), est :

$$\Delta F_{sortie} = F_S = \frac{C_E \times tg(\alpha_S)}{R_S} - 0$$

A l'entrée, la force de compensation $F_C$, toujours opposée à la force de sortie lente, est de:

$$F_C = \frac{C_E \times tg(\alpha_E)}{R_E}$$

L'écart des forces $\Delta F$ qui s'applique à la série de disques doit être capable de transférer le couple $C_E \times (1 - \lambda_0)$.

L'expression de $\Delta F$ est:

$$F_S - F_C = \frac{C_E \times (1 - \lambda_0)}{\mu \times N \times R_d}$$

d'où la seconde égalité :

$$\frac{C_E \times tg(\alpha_S)}{R_S} - \frac{C_E \times tg(\alpha_E)}{R_E} = \frac{C_E \times (1 - \lambda_0)}{\mu \times N \times R_d}$$

$$\frac{tg(\alpha_S)}{R_S} - \frac{tg(\alpha_E)}{R_E} = \frac{(1 - \lambda_0)}{\mu \times N \times R_d}$$

L'expression de l'angle de rampe de sortie qui en résulte est :

$$\boxed{tg(\alpha_S) = \frac{R_S}{\mu \times N \times R_d}}$$

Il ressort de cette relation que l'angle de sortie ne dépend que de la définition de la série de disques. Il ne dépend pas des frottements internes car ils sont neutralisés par l'angle de compensation.

**Revendications**

1.  Différentiel autobloquant de véhicule routier composé d'un boîtier (1) renfermant au moins un axe porte-satellites (11), deux planétaires (6) reliés à l'axe porte-satellites (11) par un ensemble de satellites (7), et plusieurs séries de disques (15, 16) de frottement, destinées à transférer un couple de frottement à l'une des roues associées au différentiel en réponse à une poussée axiale du planétaire opposé à celle-ci, **caractérisé en ce qu'**il comporte un élément central de retenue des planétaires (8) contre l'axe porte-satellites (11) et une couronne porte-disques (5) intégrant un dispositif de compensation d'efforts capable de maintenir ouvertes les séries de disques tant que l'écart des couples aux sorties du différentiel n'excède pas le couple créé par les frottements internes du mécanisme du différentiel.

2.  Différentiel autobloquant selon la revendication 1, **caractérisé en ce que** la couronne porte-disques (5) reçoit des galets d'entraînement (13) des satellites (11) et présente des rampes de compensation (5b) coopérant avec ces derniers pour compenser l'écart des poussées des planétaires (6) lors d'une différence de vitesses entre les roues.

3.  Différentiel autobloquant selon la revendication 2, **caractérisé en ce que** la couronne (5) présente deux paires de rampes symétriques (5b) disposées en V, pour compenser l'écart des poussées des planétaires (6) en cas de différence de vitesse entre les roues.

4.  Différentiel autobloquant selon la revendication 2 ou 3, **caractérisé en ce que** l'angle des rampes (5b) est déterminé de manière à fournir une force de compensation à hauteur de l'écart des poussées des planétaires (6) provoquées par l'écart des couples de sorties dû aux frottements internes du mécanisme du différentiel.

5.  Différentiel autobloquant selon l'une des revendications 2 à 4, **caractérisé en ce que** les séries de disques sont capables de transférer sur une seule roue l'ensemble du couple reçu, diminué des frottements internes du mécanisme du différentiel, en cas d'emballement de la roue opposée.

6.  Différentiel autobloquant selon l'une des revendications 2 à 5, **caractérisé en ce que** la couronne porte-disques (5) est vissée sur le boîtier.

7.  Différentiel autobloquant selon l'une des revendications 2 à 6, **caractérisé en ce que** les galets (13) prennent appui sur des coupelles sphériques (14) disposées dans des renfoncements (1c) du boîtier (1).

8.  Différentiel autobloquant selon l'une des revendications précédentes, **caractérisé en ce que** les séries de disques (15, 16) sont disposées sur la couronne (5) entre des plateaux presseurs (18) et une entretoise de compression (17).

9.  Différentiel selon l'une des revendications précédentes, **caractérisé en ce qu'**il possède deux séries de disques (15, 16) fermées simultanément.

**Patentansprüche**

1.  Selbstsperrendes Differential eines Straßenfahrzeugs, das aus einem Gehäuse (1) aufgebaut ist, in dem mindestens eine Ausgleichskegelradachse (11), zwei Planetenräder (6), die mit der Ausgleichskegelradachse (11) über eine Ausgleichskegelradeinheit (7) verbunden sind, und mehrere Reibungslamellenpakete (15, 16) aufgenommen sind, die dazu vorgesehen sind, ein Reibungsmoment an eines der dem Differential zugeordneten Räder als Reaktion auf einen axialen Vorschub des diesem gegenüberliegenden Planetenrads zu übertragen, **dadurch gekennzeichnet, dass** es ein zentrales Rückhalteelement der Planetenräder (8) gegen die Ausgleichskegelradachse (11) und einen Lamellenträger-Zahnkranz (5) umfasst, in den eine Ausgleichsvorrichtung für die Kräfte integriert ist, die in der Lage ist, die Lamellenpakete so lange offen zu halten, wie der Unterschied der Drehmomente an den Ausgängen des Differentials nicht das Drehmoment übersteigt, das durch die Innenreibungen des Mechanismus des Differentials erzeugt wird.

2.  Selbstsperrendes Differential nach Anspruch 1, **dadurch gekennzeichnet, dass** der Lamellenträger-Zahnkranz (5) Antriebsrollen (13) der Ausgleichskegelräder (7) aufnimmt und Ausgleichsrampen (5b) aufweist, die mit diesen zusammenwirken, um den Unterschied der Vorschübe der Planetenräder (6) auszugleichen, wenn eine Geschwindigkeitsdifferenz zwischen den Rädern vorliegt.

3. Selbstsperrendes Differential nach Anspruch 2, **dadurch gekennzeichnet, dass** der Zahnkranz (5) zwei Paare symmetrischer Rampen (5b) aufweist, die V-förmig angeordnet sind, um den Unterschied der Vorschübe der Planetenräder (6) auszugleichen, falls eine Geschwindigkeitsdifferenz zwischen den Rädern vorliegt.

4. Selbstsperrendes Differential nach Anspruch 2 oder 3, **dadurch gekennzeichnet, dass** der Winkel der Rampen (5b) dergestalt bestimmt wird, dass eine Ausgleichskraft in Höhe des Unterschieds der Vorschübe der Planetenräder (6) geliefert wird, die durch den Unterschied der Abtriebsdrehmomente aufgrund der Innenreibungen des Mechanismus des Differentials hervorgerufen werden.

5. Selbstsperrendes Differential nach einem der Ansprüche 2 bis 4, **dadurch gekennzeichnet, dass** beim Durchdrehen des gegenüberliegenden Rades die Lamellenpakete in der Lage sind, das gesamte aufgenommene Drehmoment, vermindert um die Innenreibungen des Mechanismus des Differentials, auf ein einziges Rad zu übertragen.

6. Selbstsperrendes Differential nach einem der Ansprüche 2 bis 5, **dadurch gekennzeichnet, dass** der Lamellenträger-Zahnkranz (5) an das Gehäuse angeschraubt ist.

7. Selbstsperrendes Differential nach einem der Ansprüche 2 bis 6, **dadurch gekennzeichnet, dass** sich die Rollen (13) auf sphärischen Schalen (14) abstützen, die in Vertiefungen (1c) des Gehäuses (1) angeordnet sind.

8. Selbstsperrendes Differential nach einem der vorhergehenden Ansprüche, **dadurch gekennzeichnet, dass** die Lamellenpakete (15, 16) auf dem Zahnkranz (5) zwischen Druckringen (18) und einem Sperrrad (17) angeordnet sind.

9. Differential nach einem der vorhergehenden Ansprüche, **dadurch gekennzeichnet, dass** es zwei Lamellenpakete (15, 16) besitzt, die gleichzeitig sperren.

## Claims

1. Self-locking differential for a road vehicle, made up of a cage (1) containing at least one planet carrier shaft (11), two sun gears (6) connected to the planet-carrier shaft (11) by a set of planet pinions (7), and several series of friction discs (15, 16) which are intended to transfer a friction torque to one of the wheels associated with the differential in response to axial thrust of the sun gear opposite thereto, **characterized in that** it comprises a central retaining element (8) that holds the sun gears against the planet carrier shaft (11) and a disc-bearing crown wheel (5) incorporating a load compensation device capable of holding the series of discs open as long as the difference in torque at the outputs of the differential does not exceed the torque created by the internal friction within the differential mechanism.

2. Self-locking differential according to Claim 1, **characterized in that** the disc-bearing crown wheel (5) houses drive rollers (13) for driving the planet pinions (7) and has compensation ramps (5b) collaborating with those pinions to compensate for the difference in thrust of the sun gears (6) when there is a difference in speed between the wheels.

3. Self-locking differential according to Claim 2, **characterized in that** the crown wheel (5) has two symmetric pairs of ramps (5b) arranged in a V-shape to compensate for the difference in thrust of the sun gears (6) in the event of a difference in speed between the wheels.

4. Self-locking differential according to Claim 2 or 3, **characterized in that** the angle of the ramps (5b) is determined in such a way as to supply a compensation force commensurate with the difference in thrust of the sun gears (6) caused by the difference in output torque due to internal friction of the differential mechanism.

5. Self-locking differential according to one of Claims 2 to 4, **characterized in that** the series of discs are capable of transferring to a single wheel all of the torque received, less the internal friction of the differential mechanism, if the opposite wheel begins to spin.

6. Self-locking differential according to one of Claims 2 to 5, **characterized in that** the disc-bearing crown wheel (5) is screwed to the cage.

7. Self-locking differential according to one of Claims 2 to 6, **characterized in that** the rollers (13) bear against spherical cups (14) arranged in recesses (1c) of the cage (1).

8. Self-locking differential according to one of the preceding claims, **characterized in that** the series of discs (15, 16) are arranged on the crown wheel (5) between pressure plates (18) and a compression spacer (17).

9. Differential according to one of the preceding claims, **characterized in that** it has two series of discs (15, 16), which series are closed simultaneously.

FIG.1

EP 2 671 002 B1

EP 2 671 002 B1

FIG.5

FIG.3

FIG.2

11

FIG.4

FIG.6

FIG.6A

FIG.7

FIG.7A

EP 2 671 002 B1

14

**EP 2 671 002 B1**

## RÉFÉRENCES CITÉES DANS LA DESCRIPTION

**Documents brevets cités dans la description**

- FR 2547883